(19) Europäisches Patentamt
European Patent Office
Office européen des brevets

(11) EP 2 749 677 A1

(12) EUROPEAN PATENT APPLICATION
published in accordance with Art. 153(4) EPC

(43) Date of publication:
**02.07.2014 Bulletin 2014/27**

(21) Application number: **12828630.9**

(22) Date of filing: **26.07.2012**

(51) Int Cl.:
***D01F 2/28*** *(2006.01)*
***C08B 3/00*** *(2006.01)*
***C08B 3/06*** *(2006.01)*
***C08B 11/00*** *(2006.01)*
***C08J 5/06*** *(2006.01)*
***C08L 1/08*** *(2006.01)*
***C08L 101/00*** *(2006.01)*

(86) International application number:
**PCT/JP2012/069038**

(87) International publication number:
**WO 2013/031444 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2011 JP 2011185040**

(71) Applicant: **Olympus Corporation**
**Shibuya-ku**
**Tokyo 151-0072 (JP)**

(72) Inventors:
- **SHIRAMIZU Kohei**
  **Tokyo 151-0072 (JP)**
- **LIN Lianzhen**
  **Kyoto-shi**
  **Kyoto 600-8813 (JP)**

(74) Representative: **Kuhnen & Wacker**
**Patent- und Rechtsanwaltsbüro**
**Prinz-Ludwig-Straße 40A**
**85354 Freising (DE)**

# (54) CELLULOSE NANOFIBERS AND METHOD FOR PRODUCING SAME, COMPOSITE RESIN COMPOSITION, MOLDED BODY

(57) Cellulose nanofibers have an average degree of polymerization of 600 or more to 30000 or less, an aspect ratio of 20 or more to 10000 or less, an average diameter of 1 nm or more to 800 nm or less, and an Iβ-type crystal peak in an X-ray diffraction pattern, in which a hydroxyl group is chemically modified by a modifying group.

*FIG. 1*

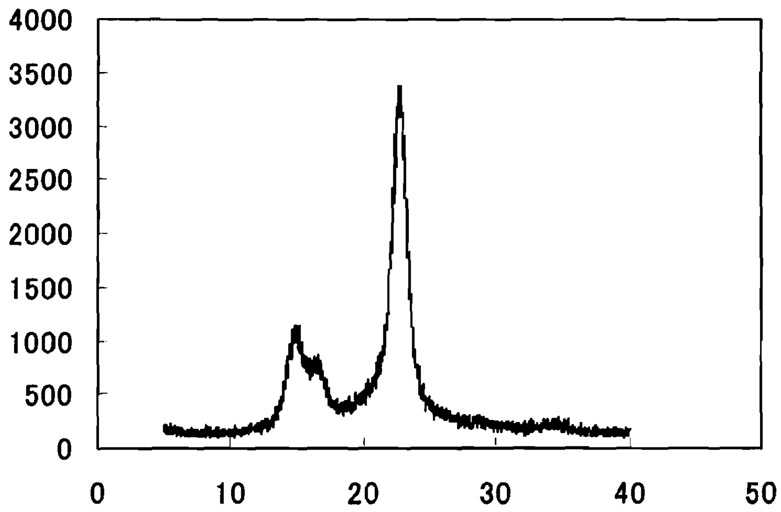


EP 2 749 677 A1

## Description

### Technical Field of the Invention

The present invention relates to cellulose nanofibers, a method for producing the same, a composite resin composition, and a molded body.

Priority is claimed on Japanese Patent Application No. 2011-185040, filed August 26, 2011, the content of which is incorporated herein by reference.

### Background Art

Cellulose nanofibers have been used as a reinforcing material of a polymer composite material in the related art.

The cellulose nanofibers are generally obtained by mechanically shearing cellulose fibers such as pulp or the like, however, in recent years, a method for defibrating a fibrous raw material using an ionic liquid has been proposed (PTL 1).

In the method disclosed in PTL 1, since it is not necessary to sufficiently perform mechanical shearing, there is no concern that the fibers are damaged, and the method is excellent in terms of its ability to easily obtain cellulose nanofibers with high strength and high aspect ratio.

Further, a method for modifying a hydroxyl group of cellulose nanofibers by a modifying group in order to increase affinity with a polymer composite material has been proposed (PTL 2).

The method disclosed in PTL 2 excels in terms of improving affinity with polymer composite materials and showing excellent dispersibility by forming a graft on the surface of the cellulose nanofibers using polyvinyl acetal.

### Citation List

### Patent Literature

[PTL 1] Japanese Unexamined Patent Application, First Publication No. 2009-179913
[PTL 2] Japanese Unexamined Patent Application, First Publication No. 2009-144262

### Summary of Invention

### Problems to be Solved by the Invention

However, when the cellulose nanofibers in which a hydroxyl group is modified are obtained by combining these methods, it is necessary to perform a two-step process of performing modification after preparation of the cellulose nanofibers.

According to the two-step process, since the number of processes required twofold, there are disadvantages in that labor is necessary for management, the cost increases, and a large amount of solvents is to be used such that the burden on the environment becomes high.

In addition, since a solution in which a cellulose raw material is dissolved is thickened during the preparation of cellulose nanofibers, a hydrolysis process (a sulfate treatment) using a low crystalline cellulose part is required to be performed. Consequently, there is a concern that the obtained cellulose nanofibers are damaged, and there is room for improvement in terms of heat resistance of the cellulose nanofibers.

Further, because a hydrolytic agent used in the hydrolysis process is difficult to separate from an ionic liquid, the recycling of the ionic liquid is difficult.

In light of the above problems, an object of the present invention is to provide cellulose nanofibers with high heat resistance and excellent reinforcement efficacy, a method for efficiently producing the cellulose nanofibers, a composite resin composition containing the cellulose nanofibers, and a molded body formed by molding the composite resin composition.

### Means for Solving the Problem

According to a first aspect of the present invention, cellulose nanofibers have an average degree of polymerization of 600 or more to 30000 or less, an aspect ratio of 20 or more to 10000 or less, an average diameter of 1 nm or more to 800 nm or less, and an Iβ-type crystal peak in an X-ray diffraction pattern, and a hydroxyl group which is

chemically modified by a modifying group.

According to a second aspect of the present invention, a thermal decomposition temperature of the cellulose nanofibers may be equal to or more than 330°C.

According to a third aspect of the present invention, a saturated absorptivity of the cellulose nanofibers in an organic solvent having an SP value of 8 or more to 13 or less may be 300% or more to 5000% or less by mass.

According to a fourth aspect of the present invention, the organic solvent may be a water-insoluble solvent.

According to a fifth aspect of the present invention, the hydroxyl group of the cellulose nanofibers may be esterified or etherified by the modifying group.

According to a sixth aspect of the present invention, a modification rate of the cellulose nanofibers may be 0.01% or more to 50% or less based on all of the hydroxyl groups.

According to a seventh aspect of the present invention, the X-ray diffraction pattern of the cellulose nanofibers, in which the range of $\theta$ is 0 to 30, have one or two peaks when $\theta$ satisfies the equation $14 \leq \theta \leq 18$, may have one or two peaks when $\theta$ satisfies the equation $20 \leq \theta \leq 24$, and otherwise have no peaks.

According to an eighth aspect of the present invention, a composite resin composition may contain the cellulose nanofibers in a resin.

According to a ninth aspect of the present invention, the composite resin composition may have an average light transmittance of 60% or more at 400 nm to 700 nm.

According to a tenth aspect of the present invention, a molded body may be formed by molding the composite resin composition.

According to an eleventh aspect of the present invention, a method for producing cellulose nanofibers may include a process of: swelling a cellulose raw material in a solution containing an ionic liquid; and adding a modifier thereto, filtering, and washing the cellulose raw material.

Effects of Invention

According to the cellulose nanofibers, the method for producing the same, the composite resin composition, and the molded body described above, it is possible to provide cellulose nanofibers with high heat resistance and excellent reinforcement efficacy, a method for efficiently producing the cellulose nanofibers, a composite resin composition containing the cellulose nanofibers, and a molded body formed by molding the composite resin composition.

Brief Description of the Drawings

FIG. 1 illustrates results of analyzing X-ray diffraction of cellulose nanofibers according to an embodiment of the present invention.

Embodiments of the Invention

[Cellulose nanofibers]

The average degree of polymerization of cellulose nanofibers according to an embodiment of the present invention is in the range of from 600 to 30000, preferably in the range of from 600 to 5000, and more preferably in the range of from 800 to 5000. In the case where the average degree of polymerization is 600 or more, sufficient reinforcement efficacy can be obtained. For example, such cellulose nanofibers can be produced by a method using an ionic liquid. In the case where the average degree of polymerization is 30000 or less, a problem such that kneading with resins is difficult to perform does not occur, because the viscosity during the kneading does not become high.

The aspect ratio of the cellulose nanofibers according to the embodiment of the present invention is 20 to 10000, and preferably 20 to 2000, from the viewpoint of reinforcement efficacy. The term "aspect ratio" of the present specification and claims means the ratio of an average fiber length to an average diameter (average fiber length/average diameter) in cellulose nanofibers. In the case where the aspect ratio is 20 or more, sufficient reinforcement efficacy can be obtained. Further, the aspect ratio is 10000 or less, moldability of a composite resin composition containing the cellulose nanofibers is excellent. Furthermore, the aspect ratio is in the range described above, in the cellulose nanofibers, the entanglement between molecules and the network structure become strong, thereby improving the mechanical strength of a molded body.

The average diameter of the cellulose nanofibers according to the embodiment of the present invention is 1 nm to 800 nm, preferably 1 nm to 300 nm, and more preferably 1 nm to 100 nm. In the case where the average diameter thereof is 1 nm or more, the cost for production is low, and in the case where the average diameter thereof is 800 nm or less, the aspect ratio thereof is hard to decrease. As a result, sufficient reinforcement efficacy can be obtained at low cost.

A cellulose type I is composite crystals of I$\alpha$-type crystals and I$\beta$-type crystals, and cellulose derived from high-grade plants such as cotton includes a large quantity of I$\beta$-type crystals, on the other hand, bacteria cellulose includes a large quantity of I$\alpha$-type crystals.

Since the cellulose nanofibers according to the embodiment of the present invention include an I$\beta$-type crystal peak in an X-ray diffraction pattern, the X-ray diffraction pattern in which the range of $\theta$ is 0 to 30 indicates a pattern unique to the I$\beta$-type crystals as shown in FIG. 1. It is preferable that the pattern have one or two peaks when $\theta$ satisfies the equation $14 \leq \theta \leq 18$, have one or two peaks when $\theta$ satisfies the equation of $20 \leq \theta \leq 24$, and otherwise have no peaks.

Further, since the cellulose nanofibers according to the embodiment of the present invention mainly includes the I$\beta$-type crystals, the reinforcement efficacy thereof is excellent when compared to the bacteria cellulose with a large quantity of I$\alpha$-type crystals.

The cellulose nanofibers according to the embodiment of the present invention are chemically modified for improving functionality. In order to use the cellulose nanofibers as a composite material, it is necessary to chemically modify hydroxyl groups on the surface of the cellulose nanofibers by a modifying group so as to reduce the number of the hydroxyl groups. The cellulose nanofibers are easily dispersed into a polymer material by preventing strong adherence between cellulose nanofibers due to hydrogen bonds, and therefore, excellent interfacial bonds can be formed between the cellulose nanofibers and the polymer material.

The ratio of the hydroxyl groups, which are chemically modified by a modifying group, to the total hydroxyl groups in the cellulose nanofibers according to the embodiment of the present invention is preferably 0.01% to 50%, more preferably 10% to 30%, and particularly preferably 10% to 20%.

It is preferable that a hydroxyl group be etherified or esterified by the modifying group in view of convenience and high efficiency.

Preferred examples of etherification agents may include an alkyl halide such as methyl chloride, ethyl chloride, or propyl bromide; dialkyl carbonate such as dimethyl carbonate, or diethyl carbonate; dialkyl sulfate such as dimethyl sulfate or diethyl sulfate; and alkylene oxide such as ethylene oxide or propylene oxide. Further, the etherification is not limited to alkyl etherification caused by the above etherification agents, and aralkyl etherification caused by benzyl bromide, silyl etherification, and the like are preferable.

Examples of silyl etherification agents may include alkoxysilane, and specific examples thereof may include alkoxysilane such as n-butoxy trimethylsilane, tert-butoxytrimethylsilane, sec-butoxytrimethylsilane, isobutoxytrimethylsilane, ethoxytriethylsilane, octyldimethylethoxysilane, or cyclohexyloxytrimethylsilane, alkoxysiloxane such as butoxypolydimethylsiloxane, and disilazane such as hexamethyldisilazane, tetramethyldisilazane, or diphenyltetramethyldisilazane. In addition, silyl halides such as trimethylsilyl chloride or butyl diphenyl silyl chloride, and silyl trifluoromethane sulfonate such as t-butyldimethylsilyl trifluoromethane sulfonate may also be used.

Examples of esterification agents include a carboxylic acid that may include a hetero atom, a carboxylic acid anhydride, and a carboxylic halide. As the esterification, an acetic acid, a propionic acid, a butyric acid, an acrylic acid, a methacrylic acid and derivatives thereof are preferred, and an acetic acid, acetic anhydride, and butyric anhydride are more preferable.

Alkyl etherification, alkyl silylation, and alkyl esterification from among etherification and esterification are preferable for improving dispersibility into a resin.

In the case where the cellulose nanofibers which are chemically modified in this way are used for a lipophilic resin, it is preferable that the saturated absorptivity of the cellulose nanofibers in an organic solvent with a solubility parameter (hereinafter, referred to as an "SP value") of 8 or more to 13 or less is 300% by mass to 5000% by mass. The cellulose nanofibers which are dispersed in the organic solvent having the above-described SP value have high affinity with a lipophilic resin, and high reinforcement efficacy.

Examples of the organic solvents having an SP value of 8 or more to 13 or less may include an acetic acid, ethyl acetate, butyl acetate, isobutyl acetate, isopropyl acetate, methyl propyl ketone, methyl isopropyl ketone, xylene, toluene, benzene, ethyl benzene, dibutyl phthalate, acetone, 2-propanol, acetonitrile, dimethylformamide, ethanol, tetrahydrofuran, methyl ethyl ketone, cyclohexane, carbon tetrachloride, chloroform, methylene chloride, carbon disulfide, pyridine, n-hexanol, cyclohexanol, n-butanol, and nitromethane.

As the organic solvent, a water-insoluble solvent (a solvent that is not mixed with water of 25°C at an arbitrary ratio) is more preferable, and examples thereof may include xylene, toluene, benzene, ethyl benzene, dichloromethane, cyclohexane, carbon tetrachloride, methylene chloride, ethyl acetate, carbon disulfide, cyclohexanol, and nitromethane. The cellulose nanofibers which are chemically modified in the above way can be dispersed in a water-insoluble solvent, and easily dispersed in a lipophilic resin in which the conventional cellulose nanofibers are hard to disperse.

Since the cellulose nanofibers according to the embodiment of the present invention have heat resistance by being chemically modified, it is possible to impart the heat resistance to other materials by allowing the cellulose nanofibers to be mixed with other materials.

The thermal decomposition temperature of the cellulose nanofibers according to the embodiment of the present invention is preferably 330°C or more, and more preferably 350°C or more. A thermal decomposition temperature of

330°C or more is too high temperature for conventional cellulose nanofibers to withstand.

The degree of crystallinity of the cellulose nanofibers having the above-described structure according to the embodiment of the present invention is 80% or more. Accordingly, the cellulose nanofibers according to the embodiment of the present invention have exceedingly excellent reinforcement efficacy on resins.

[Composite resin composition]

The composite resin composition according to the embodiment of the present invention includes the cellulose nanofibers in a resin.

As the above-described lipophilic resin in which the cellulose nanofibers according to the embodiment of the present invention can be dispersed, a resin which is sparingly soluble in water and widely used as an industrial material for which water resistance is needed is preferable. The lipophilic resin may be a thermoplastic resin or a thermosetting resin, and examples thereof may include a plant-derived resin, a resin using carbon dioxide as a raw material, an acrylonitrile-butadiene-styrene (ABS) resin, an alkylene resin such as polyethylene or polypropylene, a styrene resin, a vinyl resin, an acrylic resin, an amide resin, an acetal resin, a carbonate resin, an urethane resin, an epoxy resin, an imide resin, a urea resin, a silicone resin, a phenol resin, a melamine resin, an ester resin, a fluorine resin, a styrole resin, and engineering plastic. In addition, as the engineering plastic, polyamide, polybutylene terephthalate, polycarbonate, polyacetal, modified polyphenylene oxide, modified polyphenylene ether, polyphenylene sulfide, polyether ether ketone, polyether sulfone, polysulfone, polyamide imide, polyether imide, polyimide, polyarylate, or polyallyl ether nitrile is preferably used. Further, two or more kinds of these resins may be used as a mixture. Among these, polycarbonate is particularly good due to its high impact strength.

As the polycarbonate, generally used polycarbonate can be used. For example, aromatic polycarbonate which is produced by reacting an aromatic dihydroxy compound and a carbonate precursor can be preferably used.

Examples of the aromatic dihydroxy compound may include 2,2-bis(4-hydroxyphenyl)propane ("bisphenol A"), bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)sulfide, bis(4-hydroxyphenyl)sulfone, bis(4-hydroxyphenyl)sulfoxide, bis(4-hydroxyphenyl)ether, and bis(4-hydroxyphenyl)ketone.

Examples of the carbonate precursor may include a carbonyl halide, carbonyl ester, and a haloformate, and specific examples thereof may include phosgene, dihaloformate of a dihydric phenol, diphenyl carbonate, dimethyl carbonate, and diethyl carbonate.

As the polycarbonate used in the embodiment of the present invention, polycarbonate that does not contain an aromatic group may be used. As the polycarbonate that does not contain an aromatic group, alicyclic polycarbonate or aliphatic polycarbonate are exemplary examples. A polycarbonate resin may be linear or branched. In addition, the polycarbonate resin may be a copolymer of a polymer, which is obtained by polymerizing the aromatic dihydroxy compound and the carbonate precursor, and other polymers.

The polycarbonate resin may be produced by a conventionally known method, and examples thereof may include an interfacial polymerization, a melt transesterification method, a pyridine method, and the like.

As the types of the resin in the composite resin composition according to the embodiment of the present invention, a hydrophilic resin may be included in addition to the lipophilic resin described above. With regard to the hydrophilic resin, unmodified cellulose nanofibers, and cellulose nanofibers which are chemically modified by a hydrophilic functional group such as a sulfonic acid group, a carboxylic acid group and these chloridesmay be preferably used due to high dispersibility into the hydrophilic resin.

As the hydrophilic resin, polyvinyl alcohol and a resin which is subjected to a hydrophilic treatment are listed as examples. Among these, polyvinyl alcohol is particularly preferred for its low cost and high dispersibility of the cellulose nanofibers.

The composite resin composition according to the embodiment of the present invention may include an additive such as a filler, a flame retardant aid, a flame retardant, an antioxidant, a release agent, a colorant, or a dispersant in addition to those described above.

Examples of the filler to be used may include a carbon fiber, a glass fiber, clay, titanium oxide, silica, talc, calcium carbonate, potassium titanate, mica, montmorillonite, barium sulfate, a balloon filler, a bead filler, and a carbon nanotube.

Examples of the flame retardant to be used may include a halogen-based flame retardant, a nitrogen-based flame retardant, a metal hydroxide, a phosphorous based-flame retardant, an organic alkali metal salt, an organic alkali earth metal salt, a silicone-based flame retardant, and expanded graphite.

As the flame retardant aid, polyfluoroolefin, antimony oxide, or the like may be used.

As the antioxidant, a phosphorous-based antioxidant, a phenyl-based antioxidant, or the like may be used.

As the mold release agent, higher alcohol, carboxylic acid ester, a polyolefin wax, or polyalkylene glycol may be used.

As the colorant, an arbitrary colorant such as carbon black or phthalocyanine blue may be used.

As the dispersant, a dispersant in which the cellulose nanofibers can be dispersed in a resin may be used, and examples thereof may include an anionic, cationic, nonionic, or amphoteric surfactant, and a polymer dispersant, and these may be used in combination.

Since the cellulose nanofibers according to the embodiment of the present invention have reinforcement efficacy as described above, the composite resin composition containing the cellulose nanofibers according to the embodiment of the present invention is excellent in terms of strength. Therefore, the composite resin composition according to the embodiment of the present invention is suitable for use in an application requiring strength.

Further, since the cellulose nanofibers according to the embodiment of the present invention have excellent dispersibility in a resin, the composite resin composition containing the cellulose nanofibers according to the embodiment of the present invention is excellent in terms of transparency. Accordingly, the composite resin composition according to the embodiment of the present invention can maintain its transparency, and therefore the composite resin composition is suitable for use in an application requiring transparency.

Furthermore, since the cellulose nanofibers according to the embodiment of the present invention have excellent heat resistance when compared to the cellulose nanofibers in the related art, the composite resin composition containing the cellulose nanofibers according to the embodiment of the present invention is excellent in terms of heat resistance. Therefore, the composite resin composition according to the present invention is suitable for use in an application requiring heat resistance while maintaining transparency.

[Molded body]

The molded body according to the embodiment of the present invention is formed by molding the composite resin composition. The method for molding the molded body is not particularly limited, but examples thereof may include various conventionally known methods such as an injection molding method, an injection compression molding method, an extrusion molding method, a blow molding method, a press molding method, a vacuum molding method, and a foam molding method.

Since the molded body according to the embodiment of the present invention contains the cellulose nanofibers according to the embodiment of the present invention, the strength or the heat resistance thereof is excellent. As the molded body, although not particularly limited, medical equipment, audio equipment, or the like are listed as examples. Such a molded body may be used for a molded body for a camera, a lens barrel, or the like, which particularly requires strength.

[Method for producing cellulose nanofibers]

A method for producing cellulose nanofibers according to the embodiment of the present invention includes a process of swelling a cellulose raw material in a solution containing an ionic liquid, adding a modifier thereto, filtering, and washing the resultant.

The method for producing the cellulose nanofibers according to the embodiment of the present invention is a method for performing a process of defibrating a cellulose raw material in a solvent containing an ionic liquid and a process of chemically modifying a hydroxyl group of the cellulose nanofibers using a modifying agent in one step (hereinafter, referred to a one-step method).

In the process of defibrating the cellulose raw material in a solvent containing an ionic liquid, the solution in which the cellulose raw material is dissolved is thickened. Consequently, in the method for producing the cellulose nanofibers using an ionic liquid in the related art, a sulfate treatment hydrolyzing a low crystalline cellulose part using sulfate is necessary in order to decrease the viscosity thereof, therefore, a method for performing a process of defibration and a process of chemical modification in two steps (hereinafter, referred to as a "two-step method") has been used.

Since the one-step method according to the embodiment of the present invention has a fewer number of processes compared to the two-step method in the related art, the one-step method has advantages in terms of management and cost. In addition, the amount of a solvent being used is small, so that the burden on the environment may be reduced.

The cellulose raw material according to the embodiment of the present invention is not particularly limited, however, examples thereof may include raw materials of natural cellulose such as linter, cotton, and hemp; pulp obtained by chemically treating wood such as kraft pulp or sulfide pulp; semi-chemical pulp; used paper or recycle pulp thereof, and the like. Among these, pulp obtained by chemically treating wood is preferable, linter with high average degree of polymerization is more preferable when the cost, quality, and the burden on the environment are considered.

The shape of the cellulose raw material is not particularly limited, however, it is preferable that the cellulose raw material is used after being appropriately pulverized from the viewpoints of easiness of mechanical sheerness and accelerating permeation of solvents.

As the solution containing the ionic liquid (hereinafter, referred to as a treatment solution), a solution containing an ionic liquid represented by the following chemical formula 1 and an organic solvent is preferable.

[Chem. 1]

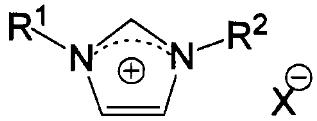

[In the formula, $R^1$ represents an alkyl group having 1 to 4 carbon atoms, $R^2$ represents an alkyl group having 1 to 4 carbon atoms or an allyl group. $X^-$ represents a halogen ion, pseudo-halogen, carboxylate having 1 to 4 carbon atoms, or thiocyanate.]

Examples of the ionic liquid may include 1-butyl-3-methylimidazolium chloride, 1-butyl-3-methylimidazolium bromide, 1-allyl-3-methylimidazolium chloride, 1-allyl-3-methylimidazolium bromide, and 1-propyl-3-methylimidazolium bromide.

It is also possible to defibrate the fiber raw material using only the ionic liquid, however, in the case where even fine fibers are likely to be dissolved due to excessively high solubility, it is preferable to add an organic solvent to the ionic liquid for use.

The type of the organic solvent to be added may be selected in consideration of compatibility with the ionic liquid, affinity with cellulose, solubility of a mixed solvent, viscosity, and the like, and particularly, it is preferable to use any one or more of organic solvents from among N,N-dimethylacetamide, N,N-dimethylformamide, 1-methyl-2-pyrrolidone, dimethylsulfoxide, acetonitrile, methanol, and ethanol.

Since the production method according to the embodiment of the present invention is a one-step method which does not include a process of a sulfate treatment, the ionic liquid after the defibration treatment does not contain a hydrolytic agent. Therefore, recycling of the ionic liquid after the defibration treatment is easy to perform.

The amount of the ionic liquid in the treatment solution may be appropriately adjusted since the amount of the ionic liquid depends on the types of the cellulose raw material, the ionic liquid, and the organic solvent, but the amount thereof is preferably 20% by mass or more from the viewpoints of swelling and solubility. In the case where an organic solvent having high solubility is used, the amount thereof is preferably 30% by mass or more, and in the case where an organic solvent having low solubility such as methanol is used, the amount thereof is preferably 50% by mass or more.

The amount of the cellulose raw material is preferably in the range of 0.5% by mass to 30% by mass based on the treatment liquid. In view of economic efficiency, the amount thereof is preferably 0.5% by mass or more, and more preferably 1% by mass or more. In view of uniformity of the defibration degree, the amount thereof is preferably 30% by mass or less, and more preferably 20% by mass.

In the method for producing the cellulose nanofibers according to the embodiment of the present invention, the cellulose raw material is swollen in the solution containing an ionic liquid. The cellulose raw material is constituted by crystalline cellulose with high degree of crystallinity, and a binding substance including lignin which is present between the crystalline cellulose, hemicellulose, and amorphous cellulose. The fine structure constituting cellulose is somewhat slackened by swelling the cellulose raw material, and enters a state in which it can be easily cleaved by the external force.

According to the embodiment of the present invention, a process of adding a modifier to the cellulose raw material in such a state, filtering, and washing the resultant is included.

As the modifier used in the production method according to the embodiment of the present invention, the same modifier as described in the method of producing the cellulose nanofibers according to the embodiment of the present invention may be used.

In the method for producing cellulose nanofibers according to the embodiment of the present invention, it is possible to obtain cellulose nanofibers having the properties described in the cellulose nanofibers according to the embodiment of the present invention.

That is, according to the embodiment of the present invention, it is possible to obtain cellulose nanofibers having an average degree of polymerization of from 600 to 30000, an aspect ratio of 20 to 10000, an average diameter of 1 nm to 800 nm, and an Iβ-type crystal peak in an X-ray diffraction pattern, in which a hydroxyl group is chemically modified by a modifying group.

Further, according to the embodiment of the present invention, since the process of a sulfide treatment is not included, there is no concern that the cellulose nanofibers are damaged, cellulose nanofibers having heat resistance with a thermal decomposition temperature of 330°C or more can thereby be obtained.

Furthermore, the obtained cellulose nanofibers have high degree of crystallinity. The reason why such effects

can be obtained is not clear, but it can be speculated as follows.

In the process of defibration in the solution containing an ionic liquid, the cellulose raw material is swollen in the solution containing an ionic liquid. That is, the fine structure constituting cellulose is somewhat slackened and enters a state in which it can be easily cleaved by the external force. Here, among three hydroxyl groups which are present in the constituent unit of the cellulose, one hydroxyl group is exposed to the surface of the cellulose, and the other two hydroxyl groups are assumed to be related to formation of the crystal structure. In the one-step method for the present invention, since a modifier is directly added to the swollen crystalline cellulose, it is speculated that the hydroxyl group exposed to the surface of the cellulose is efficiently modified.

In the two-step method, amorphous cellulose or the like, which is unnecessary, present in the cellulose raw material is removed while the swollen cellulose raw material is being hydrolyzed by the sulfate treatment.

On the other hand, in the one-step method according to the embodiment of the present invention, it can be speculated that since a hydroxyl group is hydrophobized and amorphous cellulose becomes easily dissolved in a solvent by modifying the hydroxyl group of the swollen amorphous cellulose, the hydroxyl group is therefore easily removed by filtration.

[Examples]

Hereinafter, the embodiment of the present invention will be specifically described by Examples and Comparative Examples, but the embodiment of the present invention is not limited to the following Examples.

(Example 1)

15 g filter paper cut into a 3 mm square with scissors was put into a 300 ml flask, and then 100 ml of N,N-dimethylacetamide and 100 g of an ion liquid 1-butyl-3-methylimidazolium chloride were added to the flask, followed by stirring. Subsequently, 90 g of acetic anhydride was added thereto to react with each other, and filtered to wash the solid content. The resultant was treated with a homogenizer, thereby obtaining acetylated cellulose nanofibers by the one-step method. The modification rate of the acetylated cellulose nanofibers obtained at this time was 17%, and the thermal decomposition temperature thereof was 350°C.

Subsequently, polycarbonate which was dissolved in dichloromethane in advance (PC, manufactured by Teijin Chemicals Ltd., Panlite L-1225L, refractive index: 1.58) was mixed with the acetylated cellulose nanofibers in the dichloromethane, and then dried, thereby obtaining a polycarbonate composite resin composition containing the acetylated cellulose nanofibers.

(Example 2)

Butylated cellulose nanofibers in which the one-step method was used and a polycarbonate composite resin composition containing the butylated cellulose nanofibers were obtained by the same procedures as Example 1 except that butyric anhydride was added instead of acetic anhydride. The modification rate of the butylated cellulose nanofibers obtained at this time was 12% and the thermal decomposition temperature thereof was 350°.

(Example 3)

Silylated cellulose nanofibers in which the one-step method was used and a polycarbonate composite resin composition containing the silylated cellulose nanofibers were obtained by the same procedures as Example 1 except that hexamethyl disilazane was added instead of acetic anhydride. The modification rate of the silylated cellulose nanofibers obtained at this time was 15% and the thermal decomposition temperature thereof was 350°C.

(Example 4)

Propylated cellulose nanofibers in which the one-step method was used and a polycarbonate composite resin composition containing the propylated cellulose nanofibers were obtained by the same procedures as Example 1 except that propyl bromide was added instead of acetic anhydride. The modification rate of the propylated cellulose nanofibers obtained at this time was 15% and the thermal decomposition temperature thereof was 350°C.

(Reference Example 1)

2 g filter paper cut into a 3 mm square with scissors was put into a 200 ml flask, and then 50 ml of N,N-dimethylacetamide and 60 g of an ion liquid 1-butyl-3-methylimidazolium were added to the flask, followed by stirring.

Subsequently, a sulfuric acid aqueous solution was added thereto, stirred, and filtered to wash the solid content. The resultant was treated with a homogenizer, thereby obtaining cellulose nanofibers by the two-step method. The obtained cellulose nanofibers were reacted with acetic anhydride to be acetylated, and the resultant was washed, thereby obtaining acetylated cellulose nanofibers. The modification rate of the acetylated cellulose nanofibers obtained at this time was 17%, and the thermal decomposition temperature thereof was 320°C.

Subsequently, polycarbonate which was dissolved in dichloromethane in advance (PC, manufactured by Teijin Chemicals Ltd., Panlite L-1225L, refractive index: 1.58) was mixed with the acetylated cellulose nanofibers in the dichloromethane, and then dried, thereby obtaining a polycarbonate composite resin composition containing the acetylated cellulose nanofibers.

(Reference Example 2)

Butylated cellulose nanofibers in which the two-step method was used and a polycarbonate composite resin composition containing the butylated cellulose nanofibers were obtained by the same procedures as Example 1 except that butyric anhydride was added instead of acetic anhydride. The modification rate of the butylated cellulose nanofibers obtained at this time was 16% and the thermal decomposition temperature thereof was 320°C.

(Comparative Example 1)

A polycarbonate composite resin composition was obtained by the same method as Reference Example 1 and using bacteria cellulose nanofibers obtained by drying Nata de COCO (manufactured by Fujicco Co., Ltd., average degree of polymerization: 3000 or more, average aspect ratio: 1000 or more, average diameter: 70 nm).

(Comparative Example 2)

A polycarbonate composite resin composition was obtained by the same method as Reference Example 1 and using fine crystalline cellulose (manufactured by Merck Ltd., average degree of polymerization: 250, average aspect ratio: 10, crystals having a diameter of 1 μm to 10 μm are mixed).

The cellulose nanofibers and the composite resin compositions obtained from respective Examples, Reference Examples, and Comparative Examples were measured by the following test method, and the results thereof are listed in Table 1.

(1) Measurement of average degree of polymerization

The molecular weight was evaluated by viscometry (reference: Macromolecules, volume 18, page 2394 to 2401, 1985).

(2) Aspect ratio and average diameter

The number average fiber diameter and the number average length of the cellulose nanofibers were evaluated by SEM analysis.

Specifically, a cellulose nanofiber dispersion was cast on a wafer so as to be observed by SEM. The values of fiber diameter and length were read out with respect to 20 or more strands of fibers for each of the obtained images. This operation was performed on at least 3 sheets of images of non-overlapping regions, thereby obtaining information on the diameter and length of a minimum of 30 strands of fibers.

From the data of the diameter and the length of the fibers obtained as above, the number average fiber diameter and the number average length could be calculated, and the aspect ratio was then calculated from the ratio of the number average length to the number average fiber diameter. In the case where the aspect ratio was in the range of from 20 to 10000, it was indicated as ○ (excellent), and in the case where the aspect ratio was not in the range of from 20 to 10000, it was indicated as × (poor).

(3) Crystal structure analysis (XRD)

The crystal structure of the cellulose nanofibers was analyzed using a powder X-ray diffractometer Rigaku Ultima IV. In the cases where the X-ray diffraction pattern had one or two peaks when θ satisfied the equation $14 \leq \theta \leq 18$, had one peak when θ satisfied the equation or $20 \leq \theta \leq 24$, and had no other peak besides that, they were indicated as ○ (excellent), and in the other cases, they were indicated as Δ (possible).

In the case where the crystal structure of the cellulose nanofibers was an Iβ-type crystal structure, it was indicated as ○ (excellent), and in the case where the crystal structure of the cellulose nanofibers was not the Iβ-type crystal structure, it was indicated as × (poor) in Examples, Reference Examples, and Comparative Examples.

(4) Thermal decomposition temperature (TG-DTA)

The cellulose nanofibers were measured using a thermal analysis apparatus THERMO plus TG8120. A graph in which the weight decreasing rate was plotted on vertical axis and the temperature was plotted on the horizontal axis was drawn, and the temperature of the intersection point of a tangent at the time when the weight was largely reduced and a tangent before the weight was reduced was set to the thermal decomposition temperature.

(5) Evaluation method for modification rate A1 of hydroxyl group

The modification rate of the hydroxyl group was calculated from a strength of corresponding characteristic band / a strength of characteristic band of CH (before and after 1367 $cm^{-1}$) in the cellulose ring by FT-IR. For example, in the case where a C=O group (before and after 1736 $cm^{-1}$) was obtained by modification, the value in which the strength thereof was divided by the strength of CH was obtained, and then the modification rate was calculated by standard curve that was created by a quantitative measurement method such as NMR or the like in advance.

(6) Evaluation of saturated absorptivity R

First, cellulose nanofibers of a weight (W1) were dispersed in dimethylacetamide (SP value: 11.1), thereby preparing a dispersion of 2% by weight. Subsequently, the dispersion was put in a centrifuge flask, followed by centrifugation for 30 minutes at 4500 G, and a transparent solvent layer in the upper portion of the centrifuged dispersion was removed, and then a weight (W2) of a gel layer in the lower portion of the centrifuged dispersion was measured, thereby calculating the saturated absorptivity by the following formula.

$$R = W2/W1 \times 100\%$$

In the case where the saturated absorptivity was in the range of from 300% by mass to 5000% by mass, it was indicated as ○ (excellent), and in the case where the saturated absorptivity was not in the range, it was indicated as Δ (possible).

[Table 1]

| | Example 1 | Example 2 | Example 3 | Example 4 | Reference Example 1 | Reference Example 2 | Comparative Example 1 | Comparative Example 2 |
|---|---|---|---|---|---|---|---|---|
| Polymerization degree | 800 | 800 | 800 | 800 | 800 | 800 | 3000 | 250 |
| Aspect ratio | 100 | 100 | 100 | 100 | 50 | 50 | 1000 | 10 |
| Average diameter (nm) | 30 | 30 | 30 | 30 | 30 | 30 | 70 | 1000 |
| Crystal structure | ○ | ○ | ○ | ○ | ○ | ○ | × | ○ |
| Thermal decomposition temperature (°C) | 350 | 350 | 350 | 350 | 320 | 320 | 300 | 300 |
| Modification rate A1 (%) | 17 | 12 | 15 | 15 | 17 | 16 | 0 | 0 |
| Saturated absorptivity R (%) | ○ | ○ | ○ | ○ | ○ | ○ | × | × |
| XRD | ○ | ○ | ○ | ○ | ○ | ○ | Δ | ○ |

As shown in Table 1, the composite resin compositions of Examples 1 to 4 and Reference Examples 1 and 2 were excellent in terms of the saturated absorptivity. In addition, the composite resin compositions of Examples 1 to 4 in which the cellulose nanofibers produced by the one-step method was used were excellent in terms of the thermal decomposition temperature.

The molded bodies of the respective Examples, Reference Examples, and Comparative Examples were measured by the following test method, and the results thereof were listed in Table 2.

(1) Moldability

The obtained composite resin compositions containing the cellulose nanofibers were thermally melted and molded, and the molded state was determined by visual observation. "○" indicates cases where the moldability was excellent, and "×" indicates cases where the moldability was poor..

(2) Linear thermal expansion coefficient

A linear thermal expansion coefficient between 100°C and 180°C was measured using Thermo plus TMA8310 (manufactured by Rigaku Corporation) in an air atmosphere at a heating rate of 5°C/min. The size of a test sample was set to 20 mm (length) × 5 mm (width). First, a first-run was carried out at a temperature range of room temperature to Tg, and then the temperature was cooled to room temperature and a second-run is carried out. From the results, a linear thermal expansion coefficient was calculated by the following formula.

$$\text{Linear thermal expansion coefficient} = (\text{length at a time point of } 180°\text{C} - \text{length at a time point of } 40°\text{C}) / \text{length at a time point of } 40°\text{C} \times 100 - 100$$

In the case where the linear thermal expansion coefficient was 5% or more, it was indicated as ○ (excellent), and in the case where the linear thermal expansion coefficient was less than 5%, it was indicated as × (poor).

[Table 2]

| | Example 1 | Example 2 | Example 3 | Example 4 | Reference Example 1 | Reference Example 2 | Comparative Example 1 | Comparative Example 2 |
|---|---|---|---|---|---|---|---|---|
| Moldability | ○ | ○ | ○ | ○ | ○ | ○ | × | × |
| Linear thermal expansion coefficient | ○ | ○ | ○ | ○ | ○ | ○ | ○ | × |

As shown in Table 2, the molded bodies of Examples 1 to 4 showed moldability and linear thermal expansion coefficient superior to those of the molded bodies of Comparative Examples 1 and 2.

Industrial Applicability

According to the present invention, it is possible to provide cellulose nanofibers having high heat resistance and excellent reinforcement efficacy.
Further, it is possible to provide a method for efficiently producing the cellulose nanofibers, a composite resin composition containing the cellulose nanofibers, and a molded body formed by molding the composite resin composition.

## Claims

1. Cellulose nanofibers, having an average degree of polymerization of 600 or more to 30000 or less, an aspect ratio of 20 or more to 10000 or less, an average diameter of 1 nm or more to 800 nm or less, and an Iβ-type crystal peak in an X-ray diffraction pattern, wherein
a hydroxyl group is chemically modified by a modifying group.

2. The cellulose nanofibers according to claim 1, wherein a thermal decomposition temperature of the cellulose nanofibers is equal to or more than 330°C.

3. The cellulose nanofibers according to claim 1 or 2, wherein a saturated absorptivity of the cellulose nanofibers in an organic solvent having an SP value of 8 or more to 13 or less is 300% or more to 5000% or less by mass.

4. The cellulose nanofibers according to claim 3, wherein the organic solvent is a water-insoluble solvent.

5. The cellulose nanofibers according to any one of claims 1 to 4, wherein the hydroxyl group of the cellulose nanofibers is esterified or etherified by the modifying group.

6. The cellulose nanofibers according to any one of claims 1 to 5, wherein a modification rate of the cellulose nanofibers is 0.01% or more to 50% or less based on all of the hydroxyl groups.

7. The cellulose nanofibers according to any one of claims 1 to 6, wherein the X-ray diffraction pattern in which the range of $\theta$ is 0 to 30 has one or two peaks when $\theta$ satisfies an equation $14 \leq \theta \leq 18$, has one or two peaks when $\theta$ satisfies an equation $20 \leq \theta \leq 24$, and otherwise have no peaks.

8. A composite resin composition, comprising the cellulose nanofibers according to any one of claims 1 to 7 in a resin.

9. A molded body which is formed by molding the composite resin composition according to claim 8.

10. A method for producing cellulose nanofibers, comprising
a process of: swelling a cellulose raw material in a solution containing an ionic liquid; and adding a modifier thereto, filtering, and washing the cellulose raw material.

FIG. 1

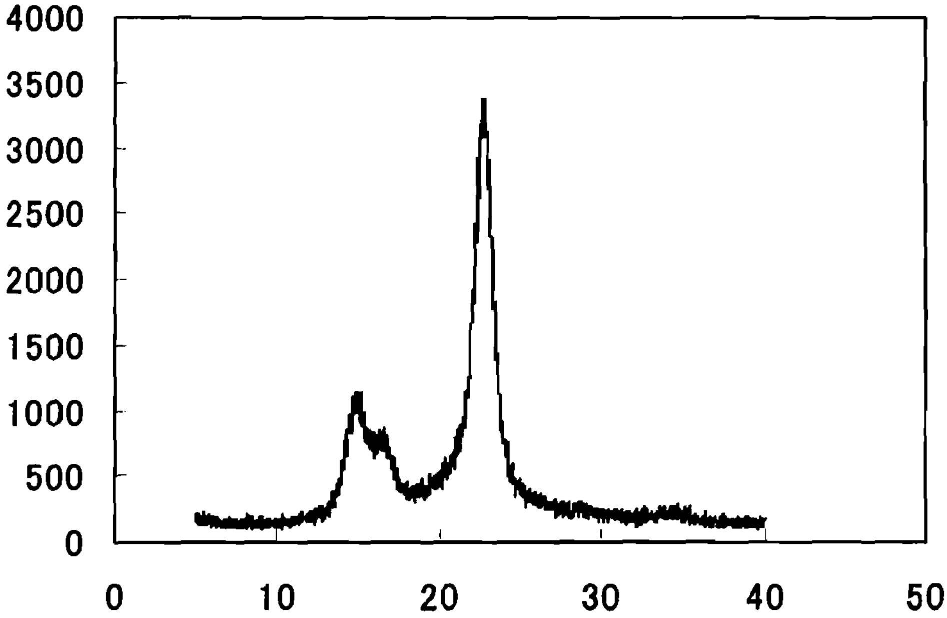

**INTERNATIONAL SEARCH REPORT**

International application No. PCT/JP2012/069038

A. CLASSIFICATION OF SUBJECT MATTER
*D01F2/28*(2006.01)i, *C08B3/00*(2006.01)i, *C08B3/06*(2006.01)i, *C08B11/00*(2006.01)i, *C08J5/06*(2006.01)i, *C08L1/08*(2006.01)i, *C08L101/00*(2006.01)i

According to International Patent Classification (IPC) or to both national classification and IPC

B. FIELDS SEARCHED

Minimum documentation searched (classification system followed by classification symbols)
D01F1/00-6/36, D01F9/00-9/04, C08B1/00-37/18, C08J5/04-5/10, C08J5/24, B29B11/16, B29B15/08-15/14, C08L1/00-101/14, C08K3/00-13/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| X | JP 2010-104768 A (KRI Inc.), 13 May 2010 (13.05.2010), claims 1, 3, 4, 16; paragraphs [0001], [0045]; examples (Family: none) | 1-10 |
| A | JP 2009-179913 A (KRI Inc.), 13 August 2009 (13.08.2009), claims 1, 4; paragraph [0001] (Family: none) | 1-10 |
| A | JP 2010-150323 A (KRI Inc.), 08 July 2010 (08.07.2010), claim 1; paragraphs [0001], [0048] to [0051] (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>19 October, 2012 (19.10.12) | Date of mailing of the international search report<br>30 October, 2012 (30.10.12) |
| Name and mailing address of the ISA/<br>Japanese Patent Office<br>Facsimile No. | Authorized officer<br>Telephone No. |

Form PCT/ISA/210 (second sheet) (July 2009)

INTERNATIONAL SEARCH REPORT

International application No.
PCT/JP2012/069038

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2011-184816 A (Olympus Corp.), 22 September 2011 (22.09.2011), claims 1 to 11 & WO 2011/108461 A1 | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011185040 A
- JP 2009179913 A
- JP 2009144262 A

### Non-patent literature cited in the description

- *Macromolecules,* 1985, vol. 18, 2394-2401